# EUROPEAN PATENT APPLICATION

(11) **EP 3 422 716 A1**
(43) Date of publication of application: **02.01.2019**
(21) Application number: 17305795.1
(22) Date of filing: 26.06.2017
(51) Int. Cl.: H04N 19/11, H04N 19/159, H04N 19/176, H04N 19/70, H04N 19/593, H04N 19/91

(54) **METHOD AND APPARATUS FOR MOST PROBABLE MODE (MPM) SORTING AND SIGNALING IN VIDEO ENCODING AND DECODING**

(71) Applicant: Thomson Licensing, 92130 Issy-les-Moulineaux (FR)
(72) Inventor: GALPIN, Franck, 35576 Cesson-Sévigné (FR); RACAPE, Fabien, 35576 Cesson-sévigné (FR); RATH, Gagan, 35576 Cesson-Sévigné (FR)
(74) Representative: Huchet, Anne

(57) **Abstract**

To construct an MPM list for encoding or decoding an intra prediction mode, a plurality of neighbor blocks or pre-defined intra prediction modes may be used. An intra mode for the neighbor blocks, or from the pre-defined intra prediction modes, is checked for availability. If available, the intra mode may be included in the MPM list if it is not already included in the list. The count is incremented for the intra prediction mode each time it is available when checked. In one implementation, the MPM construction process terminates when the MPM list is full and the MPM list is sorted in a non-increasing order. In another implementation, all possible modes are checked for statistics. Then the MPM list is sorted, and truncated to keep the first MPM modes.

## Description

### TECHNICAL FIELD

The present embodiments generally relate to a method and an apparatus for video encoding and decoding, and more particularly, to a method and an apparatus for encoding and decoding intra prediction information.

### BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized and entropy coded. To reconstruct the video, the compressed data is decoded by inverse processes corresponding to the prediction, transform, quantization and entropy coding.

### SUMMARY

According to a general aspect, a method for video decoding is presented, comprising: at least one iteration of: accessing an intra prediction mode of a neighboring block for a current block of a picture, incrementing a number associated with said accessed intra prediction mode, and including said intra prediction mode in a list of most probable modes, in the case said accessed intra prediction mode is not present in said list; wherein said method further comprises: sorting said list based on said numbers associated with intra prediction modes in said list; decoding an intra prediction mode for said current block based on said sorted list; and decoding said current block based on said decoded intra prediction mode.

According to another general aspect, a method for video encoding is presented, comprising: at least one iteration of: accessing an intra prediction mode of a neighboring block for a current block of a picture, incrementing a number associated with said accessed intra prediction mode, and including said intra prediction mode in a list of most probable modes, in the case said accessed intra prediction mode is not present in said list; wherein said method further comprises: sorting said list based on said numbers associated with intra prediction modes in said list; selecting an intra prediction mode for said current block; and encoding said intra prediction mode for said current block based on said sorted list.

According to another general aspect, an apparatus for video decoding is presented, comprising at least a memory and one or more processors, said one or more processors configured to: perform at least one iteration of: accessing an intra prediction mode of a neighboring block for a current block of a picture, incrementing a number associated with said accessed intra prediction mode, and including said intra prediction mode in a list of most probable modes, in the case said accessed intra prediction mode is not present in said list; wherein said one or more processors are further configured to: sort said list based on said numbers associated with intra prediction modes in said list; decode an intra prediction mode for said current block based on said sorted list; and decode said current block based on said decoded intra prediction mode.

According to another general aspect, an apparatus for video encoding is presented, comprising at least a memory and one or more processors, said one or more processors configured to: perform at least one iteration of: accessing an intra prediction mode of a neighboring block for a current block of a picture, incrementing a number associated with said accessed intra prediction mode, and including said intra prediction mode in a list of most probable modes, in the case said accessed intra prediction mode is not present in said list; wherein said one or more processors are further configured to: sort said list based on said numbers associated with intra prediction modes in said list; select an intra prediction mode for said current block; and encode said intra prediction mode for said current block based on said sorted list.

In one exemplary embodiment, said iterations are terminated when said list is full, for example, when said list reaches a pre-determined number of intra modes. In another embodiment, said iterations continue after said list is full. After all modes are checked, said sorted list is truncated if the number of modes in said list exceeds the maximum number of MPM modes. Said iterations may be performed for neighboring blocks that are available and use intra prediction.

Said list is initialized as an empty list at a block level. Said number is indicative of a frequency of a corresponding mode in said sorted list, and is initialized to 0 at the block level.

In addition to intra prediction modes of neighboring blocks, said list of most probable modes may also consider some pre-determined intra prediction modes. In one embodiment, a plurality of intra prediction modes may be accessed. For a respective mode of said plurality of intra prediction modes, a corresponding number associated with said respective mode of said plurality of intra prediction modes is incremented, and said respective mode of said plurality of intra prediction modes is included in said list, if said respective mode of said plurality of intra prediction modes is not already included in said list.

Further, an adjacent mode of the first directional mode in said sorted list may be included to said list, when said adjacent mode is not included in said list.

According to another general aspect, a video signal is formatted to include a signal indicative of whether an intra prediction mode for a current block of a picture belongs to a list of most probable modes; and a signal indicative an index of said intra prediction mode in said list, wherein said list is constructed by: performing at least one iteration of: accessing an intra prediction mode of a neighboring block for a current block of a picture, incrementing a number associated with said accessed intra prediction mode, and including said intra prediction mode in a list of most probable modes, in the case said accessed intra prediction mode is not present in said list, wherein said list is sorted based on said numbers associated with intra prediction modes in said list.

The present embodiments also provide a computer readable storage medium having stored thereon instructions for encoding or decoding video data according to the methods described above. The present embodiments also provide a computer readable storage medium having stored thereon a bitstream generated according to the methods described above. The present embodiments also provide a method and an apparatus for transmitting the bitstream generated according to the methods described above.

### BRIEF DESCRIPTION OF THE DRAWINGS

FIG. 1 illustrates a block diagram of an exemplary HEVC (High Efficiency Video Coding) video encoder.
FIG. 2 illustrates a block diagram of an exemplary HEVC video decoder.
FIG. 3 illustrates five causal neighbor blocks for a current Coding Unit (CU) in JVET MPM list construction.
FIG. 4A illustrates a method for adding an intra prediction mode to the MPM list, and FIG. 4B illustrates a method for constructing the MPM list.
FIG. 5 illustrates a method for adjusting the order of the L and A modes when constructing the MPM list.
FIG. 6 illustrates a method for obtaining the MPM list, according to an embodiment.
FIG. 7 illustrates an exemplary method of encoding the intra prediction mode, according to an embodiment.
FIG. 8 illustrates an exemplary method of decoding the intra prediction mode, according to an embodiment.
FIG. 9 illustrates an exemplary method of decoding the MPM mode index, according to an embodiment.
FIG. 10 illustrates a block diagram of an exemplary system in which various aspects of the exemplary embodiments may be implemented.

### DETAILED DESCRIPTION

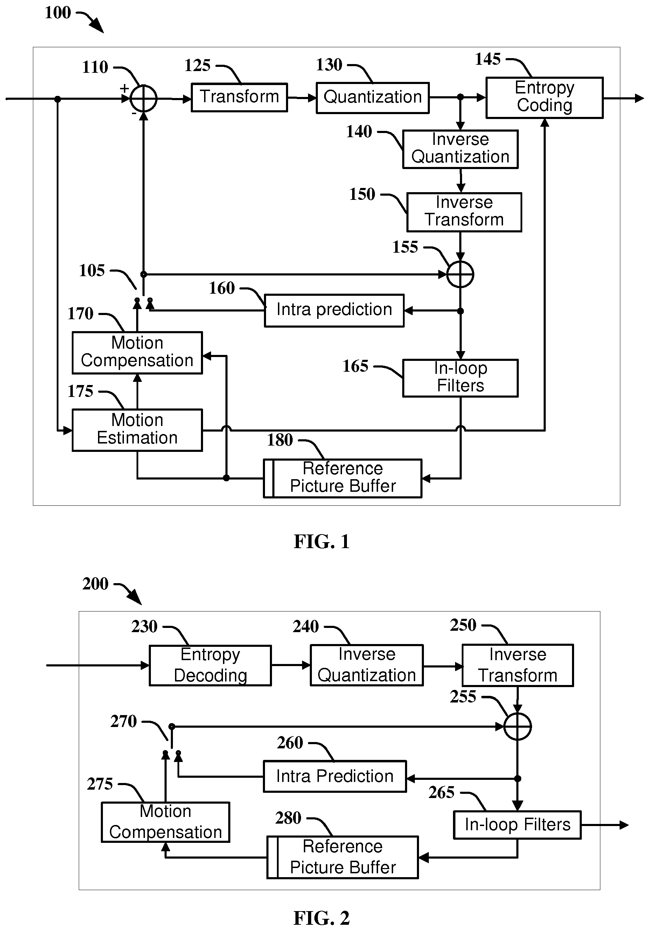

FIG. 1 illustrates an exemplary HEVC encoder 100. To encode a video sequence with one or more pictures, a picture is partitioned into one or more slices where each slice can include one or more slice segments. A slice segment is organized into coding units, prediction units and transform units.

In the present application, the terms "reconstructed" and "decoded" may be used interchangeably, the terms "image," "picture" and "frame" may be used interchangeably. Usually, but not necessarily, the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated blocks of all encoded color components (Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" can be used to refer to any of CTU, CU, PU, TU, CB, PB and TB. In addition, the "block" can also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

In order to exploit the spatial redundancy, CUs in intra mode are predicted from reconstructed neighboring samples within the same slice. The causal neighboring CUs have already been encoded/decoded when the encoding/decoding of the current CU is considered. To avoid mismatch, the encoder and the decoder have the same prediction. Therefore, both the encoder and the decoder use the information from the reconstructed/decoded neighboring causal CUs to form prediction for the current CU.

A set of 35 intra prediction modes is available in HEVC, including a planar (indexed 0), a DC (indexed 1) and 33 angular prediction modes (indexed 2-34). The intra prediction reference is reconstructed from the row and column adjacent to the current block. The reference may extend over two times the block size in horizontal and vertical direction using available samples from previously reconstructed blocks. When an angular prediction mode is used for intra prediction, reference samples can be copied along the direction indicated by the angular prediction mode. Note that an angular prediction mode may also be referred to as a directional prediction mode.

Since there are multiple intra prediction modes available, the decoder needs the mode information to form the prediction for an intra-coded CU. The encoder encodes this information using a most probable mode (MPM) list for the luma component. HEVC specifies an MPM list consisting of three distinct modes, which is constructed from the prediction modes of the intra coded CUs on the top and left of the current CU, the planar mode, the DC mode, and the directly vertical mode. Here, directly vertical mode ("VER") refers to the prediction mode when the reference samples on the top of a target block are repeated vertically down for intra prediction. Similarly, directly horizontal mode ("HOR") refers to the prediction mode when the reference samples on the left side of a target block are repeated horizontally to the right for intra prediction.

Specifically, HEVC considers three most probable modes, MPM0, MPM1 and MPM2, when coding the luma intra prediction mode predictively, as shown in Table 1, where "L" represents the intra prediction mode of the neighboring left block and "A" represents the intra prediction mode of the neighboring above block. The neighboring blocks may have different sizes than the current block. Among the three most probable modes, the first two are initialized by the luma intra prediction modes of the above and left PBs if those PBs are available and are coded using an intra prediction mode. Any unavailable intra prediction mode is considered to be the DC mode.

**TABLE 1**

| **Conditions** | | | **MPM0** | **MPM1** | **MPM2** |
|---|---|---|---|---|---|
| L=A | L ≠ planar and L ≠ DC | | L | L-1 | L+1 |
| | Otherwise | | planar | DC | 26 (VER) |
| L≠A | L ≠ planar and A ≠ planar | | L | A | planar |
| | otherwise | L ≠ DC and A ≠ DC | L | A | DC |
| | | otherwise | L | A | 26 (VER) |

When the first two most probable modes are not equal, the first most probable mode (MPM0) is set to L, the second most probable mode (MPM1) is set to A, and the third most probable mode (MPM2) is set equal to the planar mode, DC, or VER, according to which of these modes, in this order, is not a duplicate of one of the first two modes. When the first two most probable modes are the same, if this first mode has the value planar or DC, the three most probable modes are assigned as planar, DC and VER, in that order. When the first two most probable modes are the same and the first mode has an angular value, the second and third most probable modes are chosen as the two adjacent angular prediction modes of the first MPM.

The applicable luma intra prediction mode for the current block can be coded using two different options. If the prediction mode of the current block is included in the constructed list of three most probable modes, the mode is signaled by an index of the mode in the MPM list using variable length coding. Specifically, a single-bit flag prev_intra_luma_pred_flag is set to 1 to indicate that the prediction mode of the current block is equal to one of these three MPM modes, where index 0 is signaled with bit '0' for MPM0, index 1 is signaled with bits '10' for MPM1, and index 2 is signaled with bits '11' for MPM2. If the prediction mode is not equal to any mode in the MPM list, then the flag prev_intra_luma_pred_flag is set to 0 and the index of the current luma prediction mode excluding the three MPMs is indicated using a 5-bit fixed length code. For the chroma components, the prediction mode is signaled as the same mode for the luma (called derived mode) by using one bit, or one of the four modes (planar, DC, directly vertical, directly horizontal) using three bits. If any of these four modes equals the derived mode, then it is replaced by mode 34 with the same three-bit signaling as originally assigned.

For an inter CU, the corresponding coding block is further partitioned into one or more prediction blocks. Inter prediction is performed on the PB level, and the corresponding PU contains the information about how inter prediction is performed. The motion information (i.e., motion vector and reference picture index) can be signaled in two methods, namely, "merge mode" and "advanced motion vector prediction (AMVP)."

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the PU syntax for AMVP.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

FIG. 2 illustrates a block diagram of an exemplary HEVC video decoder 200. In the exemplary decoder 200, a bitstream is decoded by the decoder elements as described below. Video decoder 200 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded (230) to obtain transform coefficients, motion vectors, and other coded information. The transform coefficients are de-quantized (240) and inverse transformed (250) to decode the prediction residuals. Combining (255) the decoded prediction residuals and the predicted block, an image block is reconstructed. The predicted block may be obtained (270) from intra prediction (260) or motion-compensated prediction (i.e., inter prediction) (275). As described above, AMVP and merge mode techniques may be used to derive motion vectors for motion compensation, which may use interpolation filters to calculate interpolated values for sub-integer samples of a reference block. In-loop filters (265) are applied to the reconstructed image. The filtered image is stored at a reference picture buffer (280).

As described above, in HEVC, encoding of a frame of video sequence is based on a block structure. A frame is divided into square coding tree units (CTUs), which may undergo quadtree (QT) splitting to multiple coding units based on rate-distortion criteria. Each CU is either intra-predicted, that is, spatially predicted from the causal neighbor CUs, or inter-predicted, that is, temporally predicted from reference frames already decoded. In I-slices all CUs are intra-predicted, whereas in P and B slices the CUs can be either intra or inter-predicted. For intra prediction, HEVC defines 35 prediction modes which include one planar mode (indexed as mode 0), one DC mode (indexed as mode 1) and 33 angular modes (indexed as modes 2 - 34).

In JEM (Joint Exploration Model) under study by the Joint Video Exploration Team (JVET) for designing the next generation video compression standard, the QTBT (Quadtree plus Binary Tree) structure removes the concept of multiple partition types in HEVC, i.e., removes the separation of CU, PU and TU concepts.

A Coding Tree Unit (CTU) is firstly partitioned by a quadtree structure. The quadtree leaf nodes are further partitioned by a binary tree structure. The binary tree leaf node is named as Coding Units (CUs), which is used for prediction and transform without further partitioning. Thus, the CU, PU and TU have the same block size in the new coding QTBT block structure. In JEM, a CU consists of Coding Blocks (CBs) of different color components.

As possible improvements to HEVC, JEM 2.0 uses 65 directional intra prediction modes in addition to the planar and DC modes. The 65 directional prediction modes include the 33 directional modes specified in HEVC plus 32 additional directional modes that correspond to angles in-between two original angles. The number of prediction modes was increased to adapt to the increased CTU block size, currently set to 128x128 pixels. With a QTBT structure, the basic prediction is similarly performed as done in HEVC irrespective of the CU size, but with added tools such as Reference Sample Adaptive Filtering (RSAF) and Position Dependent Intra Prediction Combination (PDPC).

To encode the intra prediction mode for luma, the concept of using an MPM list is maintained in JEM 2.0. However, the number of candidates in the MPM list has been increased to six. In JEM 2.0, the left and above intra modes are initialized with the DC intra mode. After the initialization, the intra modes from all the above available neighbors are analyzed and the most frequent mode is selected as the above intra mode (i.e., "A"). The same process is repeated for the left neighbors, and the most frequent intra mode is selected as the left mode (i.e., "L"). The six distinct modes are selected based on the intra prediction modes of causal neighbor blocks as described in Table 2, where "Max" denotes one of L and A with the larger mode index.

In JEM and HEVC reference software, when a CU has a certain intra mode, all 4x4 blocks inside that CU are marked with that mode. To choose a neighbor block, a sample location is chosen and the intra mode of the 4x4 block covering the chosen sample position is used as the neighbor intra block, while the corresponding CU may span a larger area than 4x4, to the left or right.

**TABLE 2**

| **Conditions** | | | **MPM0** | **MPM1** | **MPM2** | **MPM3** | **MPM4** | **MPM5** |
|---|---|---|---|---|---|---|---|---|
| L = A | L ≠ planar and L ≠ DC | | L | planar | L+1 | L-1 | L+2 | DC |
| | Otherwise | | planar | DC | 26 (Ver) | 10 (Hor) | 2 | 18 |
| L ≠ A | L ≠ planar and A ≠ planar | L = DC or A=DC | L | A | planar | Max-1 | Max+1 | Max+2 |
| | | otherwise | L | A | planar | DC | Max+1 | Min-1 |
| | otherwise | L+A<2 | L | A | 26 (Ver) | 10 (Hor) | 2 | 18 |
| | | otherwise | L | A | DC | Max-1 | Max+1 | Max+2 |

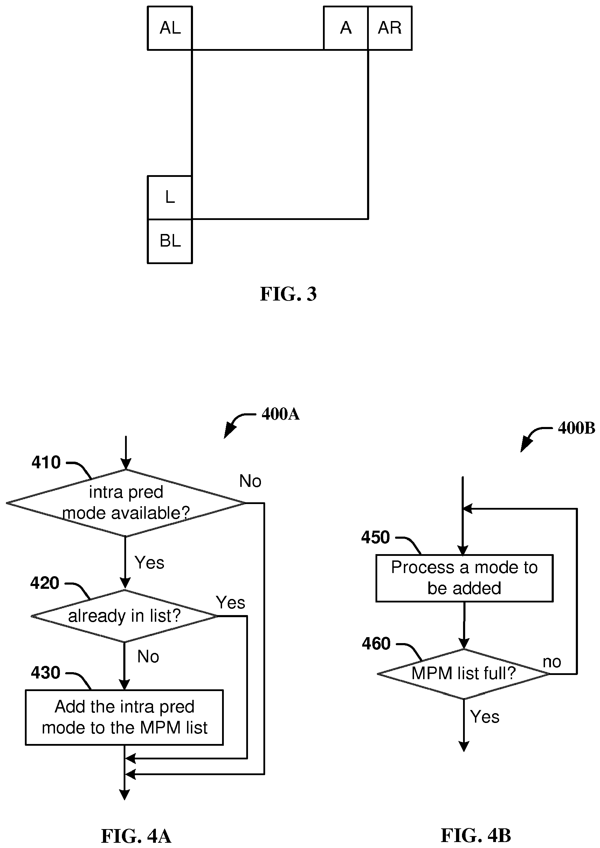

In JEM 6.0, intra mode coding with modified MPM list derivation is used in order to simplify the derivation process in JEM 2.0, as described in JVET-C0055 by V. Seregin et al., entitled "Neighbor based intra most probable modes list derivation," JVET 3rd Meeting, Geneva, CH, 26 May - 1 June 2016. In particular, only five neighbor intra prediction modes: left (L), above (A), below_left (BL), above_right (AR), and above_left (AL) as shown in FIG. 3, are considered for the MPM list construction.

The construction of the MPM list in JEM 6.0 considers probable modes to be added in a given order. If the mode to be added exists and is not already included in the list, they are added at the end of the list (pushed back), as shown in method 400A in FIG. 4A. First, the existence of the mode to be added is checked (410). If the intra mode is not available, for example, if the neighboring block does not exist or is not intra coded, the MPM list is unchanged. Otherwise, whether the mode is already included in the current list is checked (420). If the mode is not already in the list, the intra prediction mode is added at the end of the list (430). Otherwise, the list remains unchanged.

The modes to be added are checked in the following order in JEM 6.0:
- L, A, planar, DC, BL, AR, AL.
- For each entry of the current list, if the mode is directional: add mode -1 then mode +1.
- Add remaining default modes: VER, HOR, 2, DIA, where VER, HOR, and DIA correspond to the directly vertical, directly horizontal and bottom left diagonal directional modes, respectively.

The construction of the list can be performed as a loop as shown in method 400B in FIG. 4B. Initially, the MPM list is empty. The MPM list may be incremented (450) with a mode to be added, for example, using method 400A. The procedure is repeated until the list is full (460), i.e., containing six modes. Then the final list is output.

More specifically, according to JEM 6.0, at first, the left neighbor block ("L") is checked. If the left block is available and is intra predicted, then its prediction mode is included in the list as the first candidate. Then the above neighbor block ("A") is checked for availability and intra prediction. If both conditions are satisfied, then the intra prediction mode for the above block is compared to the one already included in the list. If not already included in the list, the above intra prediction mode is included as the second candidate in the MPM list. Then the planar and DC prediction modes are checked to be included in the list. After this, the below-left ("BL"), above-right ("AR") and above-left ("AL") blocks, in that order, are checked for availability and included in the list if not already included. As the modes are included in the list, their order is maintained.

Thus, the MPM list is initially formed by adding five neighbor intra prediction modes, planar, and DC modes into the MPM list. However, only unique modes can be included into the MPM list. The order in which the initial modes are included is left, above, planar, DC, below left, above right, and above left. In some cases, one or more of the five neighbor blocks may not exist or may not use intra mode. In JEM 6.0, the codec checks the availability of an intra mode from a neighbor, and skips the neighbor if it is not available or if it does not use intra mode. If the MPM list is not complete after adding neighbor intra modes, planar and DC modes, i.e., the number of modes in the list is still less than six, then derived modes are added, where the derived intra modes are obtained by adding adjacent modes, i.e., -1 or +1 to the angular modes which are already in the MPM list. It should be noted that derivation is not applied to non-angular modes (i.e., DC or planar).

If the MPM list still contains less than six distinct modes, the modes from a default set are checked for inclusion in the MPM list. The default set contains four distinct modes, namely, VER, HOR, 2, and DIA, which are to be checked in that order for inclusion in the list. If not already included, the checked mode is included in the list. This process is iterated until the MPM list contains six distinct modes.

Both the encoder and the decoder construct the MPM list in exactly the same manner, and as a result, the MPM lists for any given intra-predicted block are identical at the encoder and decoder sides.

To encode the intra prediction mode of an intra-predicted block in JEM 6.0, first the encoder checks if the intra prediction mode belongs to the MPM list of the current block. If so, a flag (namely, MPM flag) is enabled and the index of the candidate MPM mode (i.e., the MPM mode that equals the current block's intra prediction mode) in the MPM list is signaled. The index is signaled using a truncated unary (TU) code as shown in Table 3, where a mode at the beginning of the MPM list (i.e., with a smaller candidate index) uses a shorter code.

**TABLE 3**

| Candidate Index | code |
|---|---|
| 0 | 0 |
| 1 | 10 |
| 2 | 110 |
| 3 | 1110 |
| 4 | 11110 |
| 5 | 11111 |

If the prediction mode does not belong to the MPM list, the MPM flag is set to 0. The remaining 61 modes are divided into two sets. First the remaining modes are sorted according to their indices in increasing order. The first set, namely the "selected set," contains every fourth mode in the sorted list, and thus contains 16 modes. The second set contains the remaining 45 modes. A set selection flag is signaled to indicate if the prediction mode of the current block belongs to the selected set or the second set. Then, if the mode belongs to the selected set, the candidate is signaled using a 4-bit fixed length code. Otherwise a truncated binary code is used to signal the candidate in the second set.

The design of truncated unary coding of the MPM mode, as the one used in JEM 6.0, assumes that the MPM modes with lower indices are more probable to be selected than those with higher indices. In general, the prediction modes of the left and above blocks are more correlated with the prediction mode of the current block than the prediction modes of the other three neighbor blocks, and thus, L and A are included in the MPM list before the modes of other neighbor blocks. Generally, using MPMs may reduce the cost of transmitting the intra prediction mode information by using a lighter syntax for modes that statistically occur more frequently, and by re-using the modes chosen for the causal neighbor blocks of the current block.

In an article by Vadim Seregin, Xin Zhao, Marta Karczewicz, entitled "Variable number of intra modes," JVET-D0113, 4th Meeting: Chengdu, CN, 15-21 October 2016 (hereinafter "JVET-D0113") and an article by Vadim Seregin, Wei-Jung Chien, Marta Karczewicz, Nan Hu, entitled "Block shape dependent intra mode coding," 4th Meeting: Chengdu, CN, 15-21 October 2016 (hereinafter "JVET-D0114"), MPM list construction similar to JEM 6.0 is proposed, with some differences as described below.

In JVET-D0113, up to 131 intra modes are used for the luma component. In particular, it is proposed to increase the number of intra modes to 131 for blocks larger than 16x16, and to decrease the number of intra modes to 35 for 4x4 blocks. The switching of intra mode number based on block sizes is controlled by two threshold values.

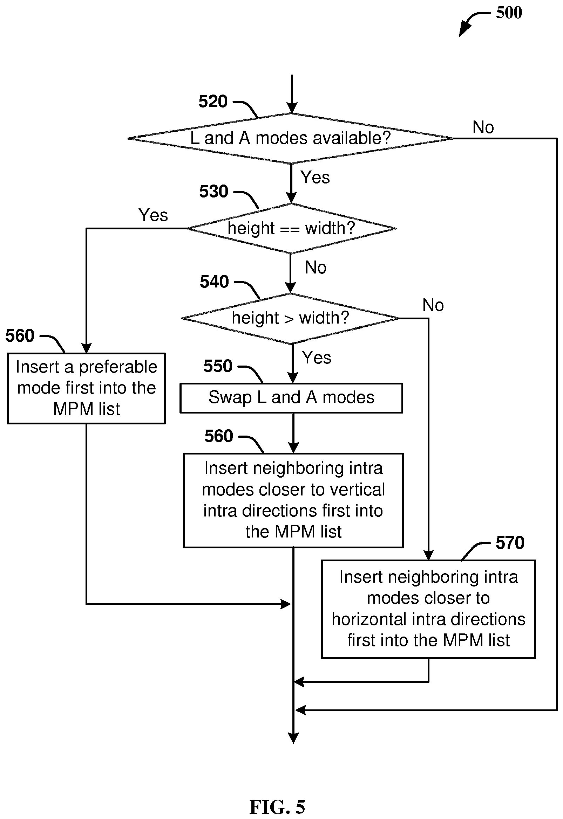

In JVET-D0114, seven MPM modes are used and block shapes are considered for intra mode coding. An additional step is added to adjust the order of the modes before they are added to the MPM list, as shown in FIG. 5. Method 500 can be implemented before method 400B. The adjustment is only applied if L and A modes (520) are available. If the current block is square (530), L and A are compared to a list of "preferable modes": {planar, DC, 2, HOR, VER and VDIA}, and a mode from the preferable list is put (560) into the MPM list first. If the current block is vertical rectangle (540), i.e., its width is smaller than its height, then L and A modes are swapped (550), and intra modes closer to vertical intra directions are put first into the MPM list. If the rectangle is horizontal, neighboring intra modes closer to horizontal intra directions are put (570) first into the MPM list. All these conditional swaps are performed to ensure that the first entry of the MPM list contains the mode with the higher probability between L and A.

In addition, in JVET-D0114, the "selected set" is replaced by a secondary MPM list, which also contains 16 modes. This secondary list is derived from the first MPM. Following the order of the modes in the MPM list, if a mode is directional, secondary modes are derived by adding -1, +1, -2, +2... up to -4, +4, and pushed back. The number of secondary modes derived per MPM entry depends on the MPM index as {4, 3, 3, 2, 2}, i.e., at most 8 modes for the first MPM index, if the derived directions are not already included in the MPM list or the secondary MPM list.

### MPM Sorting

The present embodiments are directed to encoding and decoding intra prediction modes. Generally, we consider the statistics of intra modes by taking into account available modes around the current block. In one embodiment, the order of the modes in the MPM list is adapted, in particular, the mode with the highest probability is moved to the starting position in the MPM list based on the statistics.

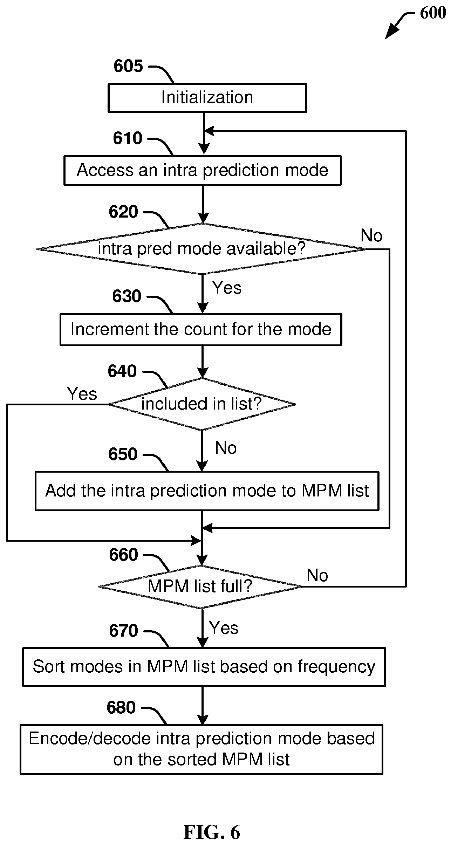

FIG. 6 illustrates an exemplary method 600 for sorting the list of MPM for a current image block, by considering the number of times the intra modes have been added during the construction, according to an embodiment. Method 600 can be implemented at the encoder and decoder. Generally, the same method of obtaining the MPM list should be used at both the encoder and decoder such that a bitstream generated by the encoder can be properly decoded by the decoder.

Method 600 starts at an initialization step 605. At the initialization step, the MPM list is empty and the counts for individual intra modes are set to 0.

The encoder or decoder then accesses (610) a mode that might be added to the MPM list. If the intra mode is not available (620), for example, if the neighboring block does not exist or is not intra coded, the MPM list is unchanged. Otherwise, If the mode is available, the encoder or decoder increments (630) the count for the mode. At step 640, the encoder or decoder checks whether the mode is already included in the current list. If the mode is not already in the list, the intra prediction mode is included to the end of the list (650). Otherwise, the list remains unchanged.

The procedure of adding the mode to the MPM list (steps 610-650) is repeated until the list is full (660). Note that steps 620, 640, 650 and 660 can be implemented in a similar manner to steps 410, 420, 430 and 460, respectively. After a full MPM list is obtained, the list is then sorted (670) following the frequency of considered modes. The more frequent (i.e., a larger count) a mode is, the lower index it gets in the MPM list. A stable sorting algorithm may be used to keep the original order for modes with equal frequencies. Consequently, the most frequent modes in the list are assigned to the first positions in the list, which results in a lower coding cost since the lower the MPM index, the fewer bits are needed for transmitting. Based on the sorted MPM list, the intra prediction mode for the current block can be encoded or decoded (680).

For an exemplary block, with the modes for "L," "A," "BL," "AR," and "AL" as planar, VER, planar, HOR, and VER, respectively, we illustrate how we may gather the statistics and sort the MPM list when method 600 is used to modify JEM 6.0.

In this example, the statistical counts for different intra modes are described after each mode is checked as shown in Table 4. After the VER + 1 mode is checked and added to the MPM list, there are six modes in the list and the process of MPM list construction ends. Because the six MPM modes are already in a non-decreasing order, the MPM list does not need to be sorted, and the resulting MPM list includes {planar, VER, DC, HOR, VER - 1, VER + 1}.

**TABLE 4**

| **Mode** | **Statistics** |
|---|---|
| L (planar) | planar: 1 |
| A (VER) | planar: 1, VER: 1 |
| planar | planar: 2, VER: 1 |
| DC | planar: 2, VER: 1, DC: 1 |
| BL (planar) | planar: 3, VER: 1, DC: 1 |
| AR (HOR) | planar: 3, VER: 1, DC: 1, HOR: 1 |
| AL (VER) | planar: 3, VER: 2, DC: 1, HOR: 1 |
| VER - 1 | planar: 3, VER: 2, DC: 1, HOR: 1, VER - 1: 1 |
| VER + 1 | planar: 3, VER: 2, DC: 1, HOR: 1, VER - 1: 1, VER + 1: 1 |

In another embodiment, the construction of the list is modified from method 600. While process 600 stops adding modes to the list when the list is full as shown in FIG. 6, the encoder or decoder may continue, without checking the condition at 660, until all possible modes are processed, so that the statistics are calculated using more modes, such as neighbors' modes, similar directions and default modes. That is, step 660 would check whether there are more modes to be processed. Because the MPM list now may contain more modes than needed, at step 670, the list is sorted and truncated with the adequate number of candidates.

In this embodiment, referring back to the example shown in TABLE 4, after mode "VER + 1" is checked, the encoder or decoder continues to check other possible modes, as shown in Table 5. After all modes are checked, the MPM modes are not in a non-decreasing order, where HOR is after DC, but has more counts than DC.

**TABLE 5**

| **mode** | **Statistics** |
|---|---|
| H - 1 | planar: 3, VER: 2, DC: 1, HOR: 1, V - 1: 1, V + 1: 1, H - 1: 1 |
| H + 1 | planar: 3, VER: 2, DC: 1, HOR: 1, V - 1: 1, V + 1: 1, H - 1: 1, H + 1: 1 |
| VER | planar: 3, VER: 3, DC: 1, HOR: 1, V - 1: 1, V + 1: 1, H - 1: 1, H + 1: 1 |
| HOR | planar: 3, VER: 3, DC: 1, HOR: 2, V - 1: 1, V + 1: 1, H - 1: 1, H + 1: 1 |
| 2 | planar: 3, VER: 3, DC: 1, HOR: 2, V - 1: 1, V + 1: 1, H - 1: 1, H + 1: 1, 2: 1 |
| DIA | planar: 3, VER: 3, DC: 1, HOR: 2, V - 1: 1, V + 1: 1, H - 1: 1, H + 1: 1, 2: 1, DIA: 1 |

Thus, the MPM modes are sorted. After sorting, the list becomes {planar, VER, HOR, DC, V - 1, V + 1, H - 1, H + 1, mode 2, DIA}, where HOR is moved ahead of DC. Because now there are more than six modes, the MPM list is truncated to contain six modes: {planar, VER, HOR, DC, V - 1, V + 1}.

In another embodiment, the construction of the list is stopped when the list is full, as in JEM 6.0. However, the MPM modes are sorted before adding the adjacent modes (-1, +1) to form an initial list, so that the adjacent added modes are derived from the most frequent MPMs. Table 6 shows an exemplary block's MPM initial list construction. In this example, VER is the most frequent mode in the initial list, which contains 3 occurrences. Before the adjacent modes for directional modes are added, this initial list is sorted and becomes: VER (3), DC (2), HOR (1), planar (1). Therefore, the next added modes are then VER-1 and VER+1, outputting a list of 6 MPM: {VER, DC, HOR, planar, VER - 1, VER + 1}. If the sorting is not performed before adjacent modes are checked, HOR-1 and HOR+1 would have been considered and the MPM list would be {VER, DC, HOR, planar, HOR - 1, HOR + 1}.

**TABLE 6**

| **Mode** | **Statistics** |
|---|---|
| L (HOR) | HOR: 1 |
| A (VER) | HOR: 1, VER: 1 |
| planar | HOR: 1, VER: 1, planar: 1 |
| DC | HOR: 1, VER: 1, planar: 1, DC: 1 |
| BL (VER) | HOR: 1, VER: 2, planar: 1, DC: 1 |
| AR (DC) | HOR: 1, VER: 2, planar: 1, DC: 2 |
| AL (VER) | HOR: 1, VER: 3, planar: 1, DC: 2 |

In Tables 4-6, we describe several methods of sorting the MPM list based on JEM 6.0. The present embodiments can also be applied to other software, for example, one implementing JVET-D0113 and JVET-D0114. In this case, the MPM list is considered full when there are seven modes in the list, and the order of modes to be checked might be adjusted as shown in FIG. 5.

### MPM Signaling

In the above, we describe different embodiments for adjusting the MPM list such that a more probable intra mode may get a lower index in a MPM list. In order for the decoder to decode the intra mode in the MPM list, the mode index needs to be indicated in the bitstream. Signaling a chosen mode index to the decoder can be relatively costly, especially at a low bitrate, when other information, such as prediction residuals, requires fewer bits. In the following, we describe several embodiments that may reduce the bitrate caused by signaling the intra prediction modes, and therefore may improve the compression efficiency.

Table 7 shows, for several block sizes, the percentages of blocks that use MPM, MPM0, MPM1, MPM2, and MPM2SUP (MPMs after MPM2), respectively, for a set of test sequences using method 600. Table 7 also shows the percentages of blocks that use MPM 0 and other MPMs (except MPM0).

**TABLE 7**

| Sizes | 4x4 | 8x4 | 4x8 | 8x8 |
|---|---|---|---|---|
| MPM | 0.742 | 0.782 | 0.760 | 0.771 |
| MPM0 | 0.375 | 0.382 | 0.361 | 0.390 |
| MPM1 | 0.166 | 0.190 | 0.190 | 0.179 |
| MPM2 | 0.093 | 0.103 | 0.095 | 0.089 |
| MPM2SUP | 0.107 | 0.107 | 0.113 | 0.113 |
| | | | | |

| sizes | 4x4 | 8x4 | 4x8 | 8x8 |
|---|---|---|---|---|
| MPM0 | 0.375 | 0.382 | 0.361 | 0.390 |
| sum MPM0SUP | 0.367 | 0.400 | 0.398 | 0.381 |

From the statistical data on this set of test sequences, we observe that if the list is well sorted, the first entry of the list often has a probability higher than 0.5 in the MPM list, that is, the first MPM is often more probable (e.g., 4x4, 8x8) than, or comparable to (e.g., 8x4, 4x8), the others combined. Thus, in one embodiment, we propose to flag the first mode in the MPM list to indicate whether the current mode is the first mode in the sorted MPM list, and if not, a second flag can be used to inform if the current mode belongs to the rest of the MPM list.

Table 8 shows a portion of the syntax structure for decoding a coding unit as provided in the H.265/HEVC specification (October 2014 version). The syntax element **prev_intra_luma_pred_flag** specifies whether the intra mode is MPM or not. Then, if **prev_intra_luma_pred_flag** is true, the index **mpm_idx** is parsed to derive the mode via its position in the MPM list. Otherwise, the index **rem_intra_luma_pred_mode** indicates which of the remaining modes to select.

**TABLE 8**

| | |
|---|---|
| coding_unit( x0,y0,log2CbSize ) { | **Descriptor** |
| if( transquant_bypass_enabled_flag ) | |
| **cu_transquant_bypass_flag** | ae(v) |
| if( slice_type!=I ) | |
| **cu_skip_flag**[ x0 ][ y0 ] | ae(v) |
| nCbS=( 1<<log2CbSize ) | |
| if( cu_skip_flag[x0][y0] ) | |
| prediction_unit( x0, y0, nCbS, nCbS ) | |
| else { | |
| if( slice_type!=I ) | |
| **pred_mode_flag** | ae(v) |
| if( CuPredMode[x0][y0]!=MODE_INTRA \|\|log2CbSize==MinCbLog2SizeY ) | |
| **part_mode** | ae(v) |
| if( CuPredMode[x0][y0]==MODE_INTRA ) { | |
| if( PartMode= =PART_2Nx2N && pcm_enabled_flag && log2CbSize >= Log2MinIpcmCbSizeY && log2CbSize <= Log2MaxIpcmCbSizeY ) | |
| **pcm_flag**[ **x0** ][ **y0** ] | ae(v) |
| if( pcm-flag[ x0 ][ y0 ] ) { | |
| while( !byte_aligned( ) ) | |
| **pcm**_**alignment**_**zero**_**bit** | f(1) |
| pcm_sample( x0, y0, log2CbSize ) | |
| } else { | |
| pbOffset=( PartMode= =PART_NxN ) ? ( nCbS / 2 ) : nCbS | |
| for( j=0; j<nCbS; j=j+pbOffset ) | |
| for( i =0; i<nCbS; i=i+pbOffset ) | |
| **prev_intra_luma_pred_flag[ x0**+**i ][ y0+j ]** | ae(v) |
| for( j=0; j<nCbS; j=j+pbOffset ) | |
| for( i =0; i<nCbS; i=i+pbOffset ) | |
| if( prev_intra_luma_pred_flag[ x0+i ][ y0+j ]) | |
| **mpm_idx[ x0**+**i ][ y0+j ]** | ae(v) |
| else | |
| **rem_intra_luma_pred_mode[ x0**+**i ][ y0+j ]** | ae(v) |
| if( ChromaArrayType = = 3 ) | |
| for( j = 0; j < nCbS; j = j + pbOffset ) | |
| for( i = 0; i<nCbS; i = i + pbOffset ) | |
| **intra_chroma_pred_mode[x0**+**i][y0+j]** | ae(v) |
| else if( ChromaArrayType != 0 ) | |
| **intra**_**chroma**_**pred**_**mode[ x0 ][ y0** ] | ae(v) |
| } | |
| ⋮ | |

In one embodiment, we propose to first indicate whether the current intra prediction mode corresponds to the first mode in the list or not. This can be done by adding a flag **intra_first_mpm_luma_flag**. If this flag is false, **prev_intra-luma_pred_flag** indicates whether the current mode is contained in the MPM list (without first most probable mode). In other word, it is equivalent to signal one most probable mode and having a secondary set of probable modes.

Table 9 shows in italics exemplary modifications of the coding_unit(x0, y0, log2CbSize) syntax structure of the H.265 specification. It is to be noted that syntax element **prev_intra_luma_pred_flag** is parsed only if syntax element **intra_first_mpm_luma_flag** is false. The rest of the parsing remains unchanged. In a different embodiment, **mpm_idx** indicates the index in the MPM list, which now excludes the first MPM.

**TABLE 9**

| | |
|---|---|
| coding_unit( x0, y0, log2CbSize ) { | **Descriptor** |
| if( transquant_bypass_enabled_flag ) | |
| **cu_transquant_bypass_flag** | ae(v) |
| if( slice_type != I ) | |
| **cu_skip_flag**[ x0 ][ y0 ] | ae(v) |
| nCbS=( 1 << log2CbSize ) | |
| if( cu_skip_flag[ x0 ][ y0 ] ) | |
| prediction_unit(x0, y0, nCbS, nCbS) | |
| else { | |
| if( slice_type != I ) | |
| **pred_mode_flag** | ae(v) |
| if( CuPredMode[ x0 ][ y0 ] != MODE_INTRA \| \| log2CbSize = = MinCbLog2SizeY ) | |
| **part_mode** | ae(v) |
| if( CuPredMode[x0][y0] = = MODE_INTRA ) { | |
| if( PartMode = = PART_2Nx2N && pcm_enabled_flag && log2CbSize >= Log2MinIpcmCbSizeY && log2CbSize <= Log2MaxIpcmCbSizeY ) | |
| **pcm_flag[x0][y0]** | ae(v) |
| if( pcm_flag[ x0 ][ y0 ]) { | |
| while( !byte_aligned( ) ) | |
| **pcm**_**alignment**_**zero**_**bit** | f(1) |
| pcm_sample( x0, y0, log2CbSize ) | |
| } else { | |
| pbOffset=(PartMode==PART_NxN) ? (nCbS/2) : nCbS | |
| for( j= 0; j < nCbS; j = j + pbOffset ) { | |
| for( i=0; i<nCbS; i=i+pbOffset ) { | |
| ***intra_first_mpm_luma_flag[x0*+*i][y0***+***j]*** | ae(v) |
| *if( !intra_first_mpm_luma_flag [ x0* + *i ][ y0* + *j ]* ) | |
| **prev_intra_luma_pred_flag[ x0** + **i ][ y0 + j ]** | ae(v) |
| *}* | |
| *}* | |
| for( j= 0; j < nCbS; j = j + pbOffset ) | |
| for( i = 0; i < nCbS; i = i + pbOffset ) | |
| *if( !intra_first_mpm_luma_flag[ x0* + *i ][ y0* + *j ] &&* prev_intra_luma_pred_flag[ x0 + i ][ y0 + j ] ) | |
| **mpm_idx[ x0** + **i ][ y0 + j** ] | ae(v) |
| else | |
| **rem_intra_luma_pred_mode[ x0** + **i ][ y0 + j ]** | ae(v) |
| if( ChromaArrayType = = 3 ) | |
| for( j = 0; j < nCbS; j = j + pbOffset) | |
| for(i = 0; i < nCbS; i = i + pbOffset ) | |
| **intra**_**chroma**_**pred**_**mode[ x0** + **i ][ y0 + j ]** | ae(v) |
| else if( ChromaArrayType != 0 ) | |
| **intra_chroma_pred_mode[ x0 ][ y0 ]** | ae(v) |
| } | |
| ... | |
| | |

This example of syntax is derived based on the existing H.265 specification, where the MPM list is composed of three modes. As described before, in other standards, the size of the list may change (for example, 6 in JEM 6.0 and 7 in JVET-D0114), and the rest of the process of intra mode coding can also change, the coding of remaining modes may change for example. It should be noted that the present embodiments can be applied to different standards or other modes/flags. Generally, we consider that it is more efficient to signal the first mode (for example, the first MPM), in a set of modes, which occurs more often than the combination of the other modes, and to condition the rest of the process to this change.

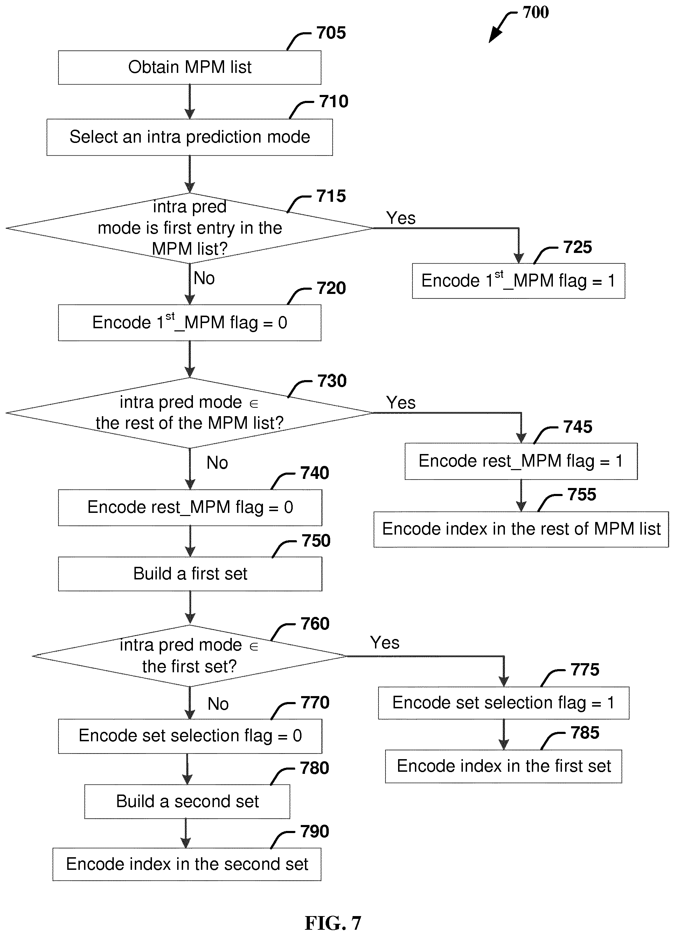

FIG. 7 illustrates an exemplary method 700 for encoding the intra prediction mode for a current block, according to an embodiment. Method 700 may be used to modify JEM 6.0. For a current block to be encoded in the intra mode, an MPM list is obtained (705), for example, using method 600. The intra prediction mode, for example, a DC, planar, or directional mode, is selected (710) for the current block, for example, based on a rate-distortion criterion. The intra prediction mode and the prediction residuals are then encoded.

To encode the intra prediction mode, the encoder first checks (715) whether the selected intra prediction mode is the first entry in the MPM list. If the intra prediction mode is the first entry in the MPM list, the first_MPM flag, for example, **intra_first_mpm_luma_flag** in Table 9, is set (725) to 1 and encoded (725) into the bitstream.

If the intra prediction mode is not the first entry in the MPM list, the first_MPM flag is set (720) to 0 and encoded (720) into the bitstream. Then the encoder checks (730) whether the selected intra prediction mode is included in the rest of the MPM list. If the intra prediction mode is in the rest of the MPM list, the rest_MPM flag is set (745) to 1, and both the rest_MPM flag and the MPM index for the selected intra prediction mode are encoded (755) into the bitstream. Similar to the exemplary modifications to HEVC syntax, **intra_first_mpm_luma_flag** and **prev_intra_luma_pred_flag** can be used for the first_MPM flag and the rest_MPM flag, respectively.

If the selected intra prediction mode is not in the MPM list, the rest_MPM flag is set (740) to 0, and is encoded into the bitstream. Then the remaining modes are sorted according to their indices in increasing order. The first set, called the selected set, is built (750) to include every fourth mode in the sorted list, and thus contains sixteen modes. If the prediction mode belongs to the selected set (760), a set selection flag is set (775) to 1 to signal that the mode belongs to the selected set, and the prediction mode is encoded (785) using a 4-bit fixed length code of the index of the selected intra prediction mode in the first set. Otherwise, if the prediction mode does not belong to the selected set, the set selection flag is set (770) to 0 to signal that the mode belongs to the second set. The second set is built (780) to include remaining 45 modes, and the prediction mode is encoded (790) using a truncated binary code signal the index in in the second set.

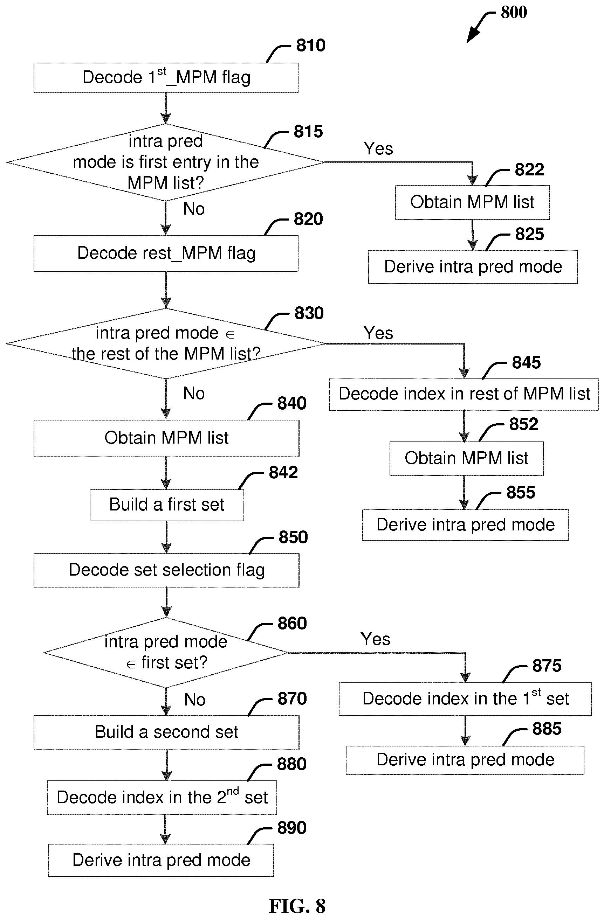

FIG. 8 illustrates an exemplary method 800 for decoding the intra prediction mode for a current block, according to an embodiment. The input to method 800 may be a bitstream, for example, encoded using method 700. The intra prediction mode and the prediction residuals are then decoded from the bitstream.

To decode the intra prediction mode, the decoder first decodes (810) a first_MPM flag, and checks (815) if the decoded value is 1 or 0. A decoded value of 1 indicates that the selected intra prediction mode is the first entry in the MPM list. If the intra prediction mode is the first entry in the MPM list, namely the first_MPM flag is decoded to be to 1, the MPM list is obtained (822), for example, using method 600, and the intra prediction mode for the current block is derived (825) as the first MPM.

If the first_MPM flag is 0, the decoder decodes (820) a rest_MPM flag, and checks (830) if the decoded value is 1 or 0. A decoded value of 1 indicates that the intra prediction mode is included in the rest of the MPM list. If the intra prediction mode is in the rest of the MPM list, namely the rest_MPM flag is decoded to be to 1, the MPM index corresponding to the intra prediction mode is decoded (845) from the bitstream. Subsequently, the MPM list is obtained (852), and the intra prediction mode can be derived (855) based on the index and the MPM list.

If the intra prediction mode is not in the MPM list, namely, if the rest_MPM flag is decoded as 0, then the MPM list is obtained (840), and the remaining modes (excluding the modes in the MPM list) are sorted according to their indices in increasing order. A first set, or a "selected set," is built (842) to include every fourth mode in the sorted list, and thus contains sixteen modes. The decoder decodes (850) a set selection flag from the bitstream. If the prediction mode belongs to the selected set (860), namely, if the set selection flag is decoded as 1, a 4-bit fixed length code of the index of the intra prediction mode in the selected set is decoded (875). Subsequently, the intra prediction mode can be derived (885).

Otherwise, if the prediction mode does not belong to the selected set, namely, if the set selection flag is decoded as 0, a second set is built (870) to include remaining 45 modes. An index in the second set is decoded (880) using a truncated binary code. Subsequently, the intra prediction mode is derived (890). Based on the decoded intra prediction block, the block can be decoded.

In the above, signaling the intra prediction modes is discussed with respect to H.265/HEVC and JEM 6.0. To encode the various flags related to intra prediction modes, CABAC contexts can be assigned to the different flags. For example, **intra_first_mpm_luma_flag** and **prev_intra_luma_pred_flag** may use different contexts.

In addition, the method of signaling the intra prediction mode as described above may be switched on or off based on the types of blocks. For example, the syntax structure as described in Table 8 or 9 may be selected, based on the shapes (rectangle or square) or sizes of the blocks. It can be the case that the switching may improve the compression efficiency for certain shapes of blocks. For example, we may turn on the switching for square blocks (4x4 and 8x8) and turn off the switching for rectangular blocks, which may improve the results for the exemplary statistics as shown in Table 7.

For some video data, the second entry in the MPM list may still be more probable than the rest of the modes combined. In this case, the encoder or decoder may add another flag to signal the second MPM, before signaling if the current intra mode belongs to the rest of the MPM list. The embodiments can be extended to another subsequent MPM in the MPM list.

In many decoder implementations, the process is split in two stages: the parsing, and the decoding. Generally, the parsing process refers to the process of extracting the syntax elements from the bitstream, where a syntax is an element of data represented in a bitstream and the semantics specify the meaning of the values of a syntax element. The semantics may further constrain the values a syntax element may choose from, and define variables, based on syntax elements, to be used in the decoding process.

The parsing may just be limited to the decoding of syntax elements values, where bits from the bitstream are used as inputs, and syntax element values are provided as outputs. For each element, a descriptor is used in the syntax table to specify the applicable parsing process.

The decoding process specifies how the syntax elements are used to reconstruct the samples. The decoding process takes the syntax element values as input, and reconstructs the video sequence based on the semantics of the syntax elements.

When designing a video codec, one rule is to achieve independent parsing, where the parsing process is independent of the decoding process. Generally, the partitioning between parsing and decoding processes is governed by the rule of limiting resources for parsing in order to dedicate lightweight hardware or software resources to the parsing process. It should be noted that the "decoding process" may also be referred to as a "reconstruction process," and the phrase "decoding process" may generally be applied to the combination of the "parsing process" and the "decoding process." Whether the phrase "decoding process" as used is intended to refer specifically to a subset of operations (e.g., without the parsing), or generally to the decoding process (e.g., with the parsing) will be clear based on the context of the specific descriptions and is believed to be well understood by those skilled in the art.

In JEM 6.0, to signal an MPM index, only first three bins are context coded using CABAC. The context modeling is defined based on the MPM mode related to the bin currently being signaled. In particular, the MPM mode is classified into one of three categories: (a) whether the mode belongs to horizontal, (b) vertical, or (c) non-angular (DC and planar) class. As a result, three contexts are used to signal the MPM index.

Because the context depends on the intra prediction mode associated with the MPM, the MPM list should be reconstructed/decoded during the parsing of the MPM index, to have access to the proper context. This may cause problems in parsing since the construction of the MPM list is not trivial and could represent high complexity for a syntax parser.

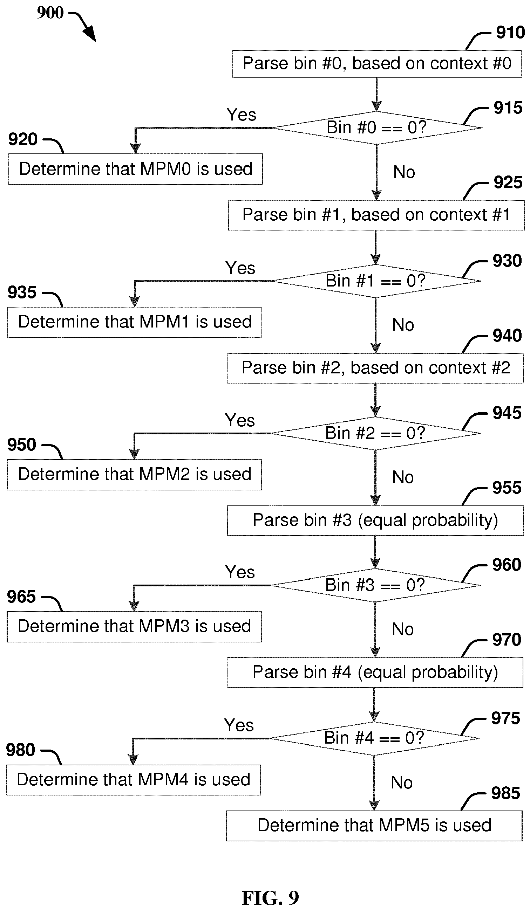

To avoid this complexity in parsing, we propose to remove the dependency of the context on the given mode. In one embodiment, at least one index bin is coded with an associated context, which depends on the MPM index itself. Thus, the context is inherently dependent on the statistics of how often the index position is activated. For example, context #0 is used for the bin #0 coding for MPM0 or other MPMs with higher indices, context #1 for the bin #1 coding for index MPM1 or other MPMs with higher indices. For this embodiment, more particularly for the decoder side, as shown in FIG. 9, bins #0, #1 and #2 are parsed (910, 925, 940) using entropy coding, based on context #0, #1 and #2, respectively. If bins #0, #1 or #2 is 0 (915, 930, 945), then the decoder determines that MPM0, MPM1 or MPM2 is used (920, 935, 950), respectively. The remaining bins #3 and #4 are parsed (955, 970) using entropy coding based on equal probability. If bins #3 or #4 is 0 (960, 975), then the decoder determines that MPM3 or MPM4 is used (965, 980), respectively. Otherwise, the decoder determines that MPM5 is used (985). In another embodiment, the index is coded with a context depending on at least one of a shape and size of the current block, since this information is trivial to access at parsing stage.

In addition, the decoding steps can be arranged to ensure independent parsing. For example, referring back to FIG. 8, the parsing (810, 815, 820, 830, 845) is performed first before obtaining (822, 840, 852) the MPM list. If the MPM list is obtained earlier, the parsing and decoding may be mixed.

Various methods are described above, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, the number of MPMs in the MPM list, three, six or seven, or the number of intra prediction modes, 35, 67, or 131. It should be noted that the specific values are for exemplary purposes and the present embodiments are not limited to these specific values.

In the above, various embodiments are described with respect to JVET based on the HEVC standard. For example, various methods of choosing neighbor blocks when constructing the MPM list as described above can be used to modify the intra prediction module (160, 260) and coding the intra mode index can be used to modify entropy encoding/decoding module (145, 230) of the JVET or HEVC encoder and decoder as shown in FIG. 1 and FIG. 2. However, the present embodiments are not limited to JVET or HEVC, and can be applied to other standards, recommendations, and extensions thereof. Various embodiments described above can be used individually or in combination. For example, the method of sorting the MPM list and the method of signaling the intra prediction mode can be used separately or in combination.

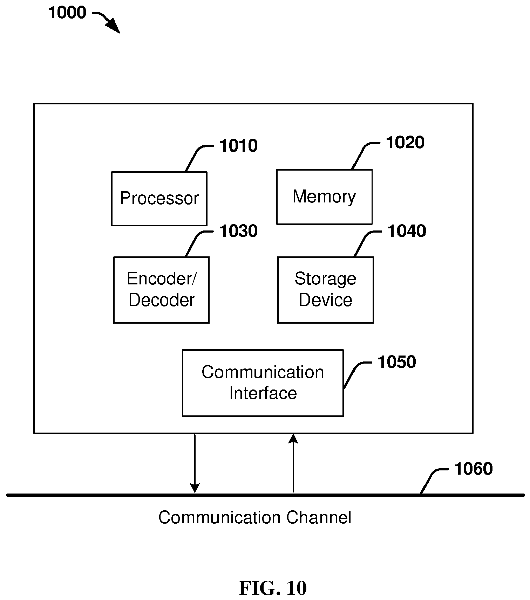

FIG. 10 illustrates a block diagram of an exemplary system in which various aspects of the exemplary embodiments may be implemented. System 1000 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 1000 may be communicatively coupled to other similar systems, and to a display via a communication channel as shown in FIG. 10 and as known by those skilled in the art to implement the exemplary video system described above.

The system 1000 may include at least one processor 1010 configured to execute instructions loaded therein for implementing the various processes as discussed above. Processor 1010 may include embedded memory, input output interface and various other circuitries as known in the art. The system 1000 may also include at least one memory 1020 (e.g., a volatile memory device, a non-volatile memory device). System 1000 may additionally include a storage device 1020, which may include non-volatile memory, including, but not limited to, EEPROM, ROM, PROM, RAM, DRAM, SRAM, flash, magnetic disk drive, and/or optical disk drive. The storage device 1040 may comprise an internal storage device, an attached storage device and/or a network accessible storage device, as non-limiting examples. System 1000 may also include an encoder/decoder module 1030 configured to process data to provide an encoded video or decoded video.

Encoder/decoder module 1030 represents the module(s) that may be included in a device to perform the encoding and/or decoding functions. As is known, a device may include one or both of the encoding and decoding modules. Additionally, encoder/decoder module 1030 may be implemented as a separate element of system 1000 or may be incorporated within processors 1010 as a combination of hardware and software as known to those skilled in the art.

Program code to be loaded onto processors 1010 to perform the various processes described hereinabove may be stored in storage device 1040 and subsequently loaded onto memory 1020 for execution by processors 1010. In accordance with the exemplary embodiments, one or more of the processor(s) 1010, memory 1020, storage device 1040 and encoder/decoder module 1030 may store one or more of the various items during the performance of the processes discussed herein above, including, but not limited to the input video, the decoded video, the bitstream, equations, formula, matrices, variables, operations, and operational logic.

The system 1000 may also include communication interface 1050 that enables communication with other devices via communication channel 1060. The communication interface 1050 may include, but is not limited to a transceiver configured to transmit and receive data from communication channel 1060. The communication interface may include, but is not limited to, a modem or network card and the communication channel may be implemented within a wired and/or wireless medium. The various components of system 1000 may be connected or communicatively coupled together using various suitable connections, including, but not limited to internal buses, wires, and printed circuit boards.

The exemplary embodiments may be carried out by computer software implemented by the processor 1010 or by hardware, or by a combination of hardware and software. As a non-limiting example, the exemplary embodiments may be implemented by one or more integrated circuits. The memory 1020 may be of any type appropriate to the technical environment and may be implemented using any appropriate data storage technology, such as optical memory devices, magnetic memory devices, semiconductor-based memory devices, fixed memory and removable memory, as non-limiting examples. The processor 1010 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method for video decoding, comprising:
at least one iteration of:
accessing (610) an intra prediction mode of a neighboring block for a current block of a picture,
incrementing (630) a number associated with said accessed intra prediction mode, and
including (650) said intra prediction mode in a list of most probable modes, in the case said accessed intra prediction mode is not present in said list;
wherein said method further comprises:
sorting (670) said list based on said numbers associated with intra prediction modes in said list;
decoding (680) an intra prediction mode for said current block based on said sorted list; and
decoding said current block based on said decoded intra prediction mode.

2. A method for video encoding, comprising:
at least one iteration of:
accessing (610) an intra prediction mode of a neighboring block for a current block of a picture,
incrementing (630) a number associated with said accessed intra prediction mode, and
including (650) said intra prediction mode in a list of most probable modes, in the case said accessed intra prediction mode is not present in said list;
wherein said method further comprises:
sorting (670) said list based on said numbers associated with intra prediction modes in said list;
selecting an intra prediction mode for said current block; and
encoding (680) said intra prediction mode for said current block based on said sorted list.

3. An apparatus (1000) for video decoding, comprising at least a memory and one or more processors, said one or more processors configured to:
perform at least one iteration of:
accessing an intra prediction mode of a neighboring block for a current block of a picture,
incrementing a number associated with said accessed intra prediction mode, and
including said intra prediction mode in a list of most probable modes, in the case said accessed intra prediction mode is not present in said list;
wherein said one or more processors are further configured to:
sort said list based on said numbers associated with intra prediction modes in said list;
decode an intra prediction mode for said current block based on said sorted list; and
decode said current block based on said decoded intra prediction mode.

4. An apparatus (1000) for video encoding, comprising at least a memory and one or more processors, said one or more processors configured to:
perform at least one iteration of:
accessing an intra prediction mode of a neighboring block for a current block of a picture,
incrementing a number associated with said accessed intra prediction mode, and
including said intra prediction mode in a list of most probable modes, in the case said accessed intra prediction mode is not present in said list;
wherein said one or more processors are further configured to:
sort said list based on said numbers associated with intra prediction modes in said list;
select an intra prediction mode for said current block; and
encode said intra prediction mode for said current block based on said sorted list.

5. The method of claim 1 or 2, or the apparatus of claim 3 or 4, wherein said at least one iteration is terminated when said list is full.

6. The method of claim 1 or 2, further comprising, or the apparatus of claim 3 or 4, further configured to perform:
truncating said sorted list, when a number of modes in said list exceeds a value.

7. The method of any one of claims 1, 2, 5 and 6, or the apparatus of any one of claims 3-6, or the apparatus of any one of claims 3-6, wherein a corresponding iteration is performed when said neighboring block is available and uses intra prediction.

8. The method of any one of claims 1, 2 and 5-7, or the apparatus of any one of claims 3-7, wherein said list is initialized as an empty list.

9. The method of any one of claims 1, 2 and 5-8, or the apparatus of any one of claims 3-8, wherein said number for each mode is initialized to 0.

10. The method of claim 9, or the apparatus of claim 9, wherein said number is indicative of a frequency of a corresponding mode in said sorted list.

11. The method of claim 8 or 9, or the apparatus of claim 8 or 9, wherein said initialization is performed at a block level.

12. The method of any one of claims 1, 2 and 5-11, further comprising, or the apparatus of any one of claims 3-11, further configured to perform:
accessing a plurality of intra prediction modes;
performing, for a respective mode of said plurality of intra prediction modes:
incrementing a corresponding number associated with said respective mode of said plurality of intra prediction modes;
including said respective mode of said plurality of intra prediction modes in said list, responsive to whether said respective mode of said plurality of intra prediction modes is already included in said list.

13. The method of any one of claims 1, 2 and 5-12, further comprising, or the apparatus of any one of claims 3-12, further configured to perform:
accessing an adjacent mode of the first directional mode in said sorted list; and
including said adjacent mode to said list, when said adjacent mode is not included in said list.

14. A video signal, formatted to include:
a signal indicative of whether an intra prediction mode for a current block of a picture belongs to a list of most probable modes; and
a signal indicative an index of said intra prediction mode in said list, wherein said list is constructed by:
performing at least one iteration of:
accessing an intra prediction mode of a neighboring block for a current block of a picture,
incrementing a number associated with said accessed intra prediction mode, and
including said intra prediction mode in a list of most probable modes, in the case said accessed intra prediction mode is not present in said list, wherein said list is sorted based on said numbers associated with intra prediction modes in said list.

15. A computer program comprising software code instructions configured to perform the method according to any one of claims 1, 2 and 5-13, when the computer program is executed by one or more processors.
